# EUROPÄISCHE PATENTSCHRIFT

(11) **EP 1 504 068 B1**
(45) Veröffentlichungstag und Bekanntmachung des Hinweises auf die Patenterteilung: **17.10.2007**
(21) Anmeldenummer: 03752730.6
(22) Anmeldetag: 12.05.2003
(51) Int. Cl.: C09D 17/00

(54) **MICAPIGMENTE ENTHALTENDE, WÄSSRIGE PIGMENTPASTEN UND IHRE VERWENDUNG ZUR HERSTELLUNG VON EFFEKTGEBENDEN WÄSSRIGEN BESCHICHTUNGSSTOFFEN**
AQUEOUS PIGMENT PASTES CONTAINING MICA PIGMENTS AND THE USE THEREOF FOR PRODUCING AQUEOUS, DECORATIVE-EFFECT COATINGS
PATES PIGMENTAIRES AQUEUSES CONTENANT DES PIGMENTS MICA ET LEUR UTILISATION POUR PRODUIRE DES SUBSTANCES DE REVETEMENT AQUEUSES A EFFETS

(30) Priorität: 16.05.2002 DE 10221815; 29.06.2002 DE 10229343
(43) Veröffentlichungstag der Anmeldung: 09.02.2005
(73) Patentinhaber: BASF Coatings AG, 48165 Münster (DE)
(72) Erfinder: SAPPER, Götz-Ekkehard, 97222 Rimpar (DE); HUPP, Anne, 97270 Kist (DE)
(74) Vertreter: Leifert & Steffan
(86) Internationale Anmeldenummer: PCT/EP2003/004923
(87) Internationale Veröffentlichungsnummer: WO 2003/097752

(56) Entgegenhaltungen:
- DE-A- 19 712 957
- DE-C- 4 427 931
- US-A- 3 687 885
- US-A- 5 227 421

## Beschreibung

Die vorliegende Erfindung betrifft neue, Micapigmente enthaltende, von Bindemitteln und Reibharzen freie, wässrige Pigmentpasten. Außerdem betrifft die vorliegende Erfindung die Verwendung der neuen, Micapigmente enthaltenden, von Bindemitteln und Reibharzen freien, wässrigen Pigmentpasten für die Herstellung von effektgebenden wässrigen Beschichtungsstoffen. Außerdem betrifft die vorliegende Erfindung ein neues Verfahren zur Herstellung von effektgebenden wässrigen Beschichtungsstoffen.

Während die Verwendung von Aluminiumeffektpigmenten in Wasserbasislacken seit langem bekannt ist, werden neuerdings zunehmend effektgebende Glimmer- oder Micapigmente eingesetzt, um Mehrschichtlackierungen mit besonders attraktiven Farbeffekten und optische Effekten zu realisieren.

Wegen ihrer vergleichsweise großen Empfindlichkeit gegen mechanische Einwirkung bereiten Micapigmente Probleme bei der Einarbeitung in wässrige Beschichtungsstoffe, insbesondere Wasserbasislacke.

Die Micapigmente werden üblicherweise in organischen Lösemitteln angeteigt oder angerieben. Nachteilig ist hierbei nicht nur die Verwendung von organischen Lösemitteln, sondern auch das rasche Absetzen der Micapigmente, was zu Stippen in den Wasserbasislacken und den farb- und/oder effektgebenden Mehrschichtlackierungen führt.

Die Micapigmente können aber auch in wässrigen Mischlacken angerieben werden, die eine stoffliche Zusammensetzung aufweisen, die derjenigen der zu pigmentierenden Wasserbasislacke weitgehend entspricht. So können die wässrigen Mischlacke ein Polyurethanharz, ein Melaminharz, ein Amin, ein Schichtsilikat, organische Lösemitteln (Cosolventien) und Wasser enthalten. Nachteilig ist, dass die betreffenden Pigmentpasten nur eine sehr begrenzte Lagerfähigkeit von maximal wenigen Tagen haben. Danach kommt es zum Absetzen und zur Bildung von Stippen und Koagulaten, was die Qualität der farb- und/oder effektgebenden Mehrschichtlackierungen verringert. Auch für die großtechnische Lackierung in der Linie beim Automobilhersteller ist die mangelhafte Lagerfähigkeit ein großes Problem. So können die Pigmentpasten nicht auf Vorrat in größeren Mengen produziert werden, was aber aus wirtschaftlichen Gründen wünschenswert wäre. Auch die Transportfähigkeit der Pigmentpasten lässt stark zu wünschen übrig. Dadurch entfällt die Möglichkeit, die Pigmentpasten an einem Produktionsstandort mit optimalen Produktionsbedingungen herzustellen und zu den Kunden zu transportieren. Außerdem müssen die Pigmentpasten für das Nachtönen von Wasserbasislacken jedesmal neu hergestellt werden.

Aus dem Artikel von Mike Venturini und Kurt Beale in Modem Paints & Coatings, Februar 2000, »Specialty Pigments & Additives, Special Treatment, Dispersion and settling guidelines for pearlescent pigments in solvent- and water-based coatings«, ist eine Pigmentpaste bekannt, die aus 45,9 Gew.-% Wasser, 15 Gew.-% Ethylenglykolbutylether, 0,1 Gew.-% 2-Amino-2-methyl-1-propanol, 2,5 Gew.-% eines hydroxylgruppenhaltigen Polyacrylatharzes als Reibharz, 1,5 Gew.-% eines alkaliquellbaren Verdickers und 35 Gew.-% eines Micapigments besteht. Auch hier ist der vergleichsweise hohe Gehalt an organischen Lösemitteln sowie die Neigung zur Bildung von Stippen und Koagulaten und die begrenzte Lagerfähigkeit von Nachteil. Ansonsten können die Micapigmente durch Oberflächenladungen, die durch ionische Tenside erzeugt werden, oder mit Hilfe nichtionischer Tenside sterisch stabilisiert werden. Die sterische Stabilisierung kommt vor allem bei nichtwässrigen Systemen in Betracht. Diese weisen aber die vorstehend geschilderten Nachteile auf.

Aufgabe der vorliegenden Erfindung ist es, eine neue, Micapigmente enthaltende, wässrige Pigmentpaste bereitzustellen, die die Nachteile des Standes der Technik nicht mehr länger aufweist, sondern die bei einem möglichst geringen Gehalt an organischen Lösemitteln, Additiven und polymeren Bindemitteln stabil, lagerfähig, transportfähig und ohne Beschädigung der Micapigmente in einfacher Weise herstellbar ist. Vorzugsweise soll die neue, Micapigmente enthaltende, wässrige Pigmentpaste mehr als ein Jahr ohne Absetzen und ohne Bildung von Stippen und Koagulaten lagerfähig sein.

Die neue, Micapigmente enthaltende, wässrige Pigmentpaste soll an einem Produktionsstandort, der optimale Bedingungen bietet, hergestellt und zu den Kunden, insbesondere zu den Automobilherstellern, transportiert werden können. In dieser Weise soll der Aufwand für die Lagerhaltung signifikant verringert werden. Außerdem soll die neue, Micapigmente enthaltende, wässrige Pigmentpaste in den Ringleitungen der Lackieranlagen problemlos geschert werden können, ohne dass sie geschädigt wird.

Die neue, Micapigmente enthaltende, wässrige Pigmentpaste soll die Herstellung lagerfähiger, transportierbarer, farbtonstabiler, effektstabiler und leicht applizierbarer, wässriger Beschichtungsstoffe, insbesondere Wasserbasislacke, ermöglichen, die hervorragende farb- und/oder effektgebende Mehrschichtlackierungen von Automobilqualität (vgl. hierzu auch das europäische Patent EP 0 352 298 B1, Seite 15, Zeile 42, bis Seite 17, Zeile 40) liefern.

Demgemäß wurde die neue, Micapigmente enthaltende, von Bindemitteln und Reibharzen freie, wässrige Pigmentpaste gefunden, die, bezogen auf ihre Gesamtmenge,
(A) 15 bis 25 Gew.-% mindestens eines Micapigments,
(B) 0,45 bis 0,75 Gew.-% mindestens eines nichtassoziativ wirkenden Verdickers aus mindestens einem Methacrylatcopolymerisat auf Basis von (C₁-C₆)-Alkyl(meth)acrylat und (Meth)acrylsäure,
(C) 0,1 bis 0,4 Gew.-% mindestens eines organischen Amins,
(D) 0,1 bis 12 Gew.-% mindestens eines nichtionischen Tensids und
(E) mindestens 50 New.-% Wasser
enthält und im Folgenden als »erfindungsgemäße Pigmentpaste« bezeichnet wird.

Außerdem wurde die neue Verwendung der erfindungsgemäßen Pigmentpaste zur Herstellung von effektgebenden, insbesondere farb- und effektgebenden, wässrigen Beschichtungsstoffen gefunden, die im Folgenden als »erfindungsgemäße Verwendung« bezeichnet wird.

Nicht zuletzt wurde das neue Verfahren zur Herstellung eines effektgebenden oder eines farb- und effektgebenden, wässrigen Beschichtungsstoffs gefunden, bei dem man mindestens eine Pigmentpaste mit mindestens einem wässrigen Mischlack, enthaltend mindestens ein wasserlösliches und/oder -dispergierbares Bindemittel, vermischt und die resultierende Mischung homogenisiert, wobei man mindestens eine erfindungsgemäße Pigmentpaste mit dem Mischlack in einer Menge vermischt, dass der resultierende effektgebende oder farb- und effektgebende, wässrige Beschichtungsstoff, bezogen auf seine Gesamtmenge,
- 2 bis 6 Gew.-% mindestens eines Micapigments (A),
- 0,1 bis 2 Gew.-% mindestens eines nichtassoziativ wirkenden Verdickers (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines nichtionischen Tensids (D)
enthält.

Im folgenden wird das neue Verfahren zur Herstellung eines effektgebenden Beschichtungsstoffs als »erfindungsgemäßes Verfahren« bezeichnet.

Im Hinblick auf den Stand der Technik war es überraschend und für den Fachmann nicht vorhersehbar, dass die Aufgabe, die der vorliegenden Erfindung zugrundelag, mit Hilfe der erfindungsgemäßen Pigmentpaste gelöst werden konnte, ohne dass dabei die eingangs geschilderten Nachteile des Standes der Technik auftraten.

Die erfindungsgemäße Pigmentpaste war ohne Beschädigung der Micapigmente in einfacher Weise herstellbar. Dabei war sie im wesentlichen oder völlig frei von organischen Lösemitteln, Bindemitteln und Reibharzen. Auch mussten nur vergleichsweise geringe Mengen an Additiven zugesetzt werden. Dennoch war die erfindungsgemäße Pigmentpaste überraschenderweise stabil, transportfähig und lagerfähig.

Besonders überraschend war, dass die erfindungsgemäße Pigmentpaste mehr als ein Jahr ohne Absetzen und ohne Bildung von Stippen und Koagulaten lagerfähig war.

Die erfindungsgemäße Pigmentpaste konnte an einem Produktionsstandort, der optimale Bedingungen bot, hergestellt und zu den Kunden, insbesondere zu den Automobilherstellern, transportiert werden. In dieser Weise konnte der Aufwand für die Lagerhaltung beim Kunden signifikant verringert werden. Außerdem konnte die erfindungsgemäße Pigmentpaste in den Ringleitungen der Lackieranlagen problemlos geschert werden, ohne dass sie geschädigt wurde.

Überraschenderweise lieferte die erfindungsgemäße Pigmentpaste lagerfähige, transportfähige, farbtonstabile, effektstabile und leicht applizierbare, wässrige Beschichtungsstoffe, insbesondere Wasserbasislacke.

Die Wasserbasislacke ermöglichten die Herstellung hervorragender effektgebender oder farb- und effektgebender Mehrschichtlackierungen von Automobilqualität. Gemäß dem europäischen Patent EP 0 352 298 B 1, Seite 15, Zeile 42, bis Seite 17, Zeile 14, bedeutet dies, dass die betreffenden Mehrschichtlackierungen
(1) einen hohen Glanz,
(2) eine hohe Abbildungsunterscheidbarkeit,
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit
aufwiesen.

Die erfindungsgemäße Pigmentpaste ist von Bindemitteln und Reibharzen frei. Zu dem Begriff »Bindemittel« wird auf Römpp Lexikon Lacke und Druckfarben, Georg Thieme Verlag, Stuttgart, New York, 1998, »Bindemittel«, Seiten 73 und 74, verwiesen. Reibharze dienen dem Anreiben von Pigmenten (vgl. Römpp Lexikon Lacke und Druckfarben, Georg Thieme Verlag, Stuttgart, New York, 1998, »Anreiben«, Seite 34) zur Herstellung von Pigmentpasten oder Pigmentpräparationen (vgl. Römpp Lexikon Lacke und Druckfarben, Georg Thieme Verlag, Stuttgart, New York, 1998, »Pigmentpräparationen«, Seite 452). Sie sind Bindemittel, die eine besonders hohe Fähigkeit zur Dispergierung von Pigmenten aufweisen.

Im Rahmen der vorliegenden Erfindung bedeutet »von Bindemitteln und Reibharzen frei«, dass die erfindungsgemäße Pigmentpaste keine Bindemittel und keine Reibharze enthält oder nur so geringe Mengen hiervon, dass die anwendungstechnischen Eigenschaften der erfindungsgemäßen Pigmentpaste hierdurch nicht geprägt, insbesondere nicht nachteilig beeinflusst werden.

Vorzugsweise ist die erfindungsgemäße Pigmentpaste auch frei von organischen Lösemitteln. Dies bedeutet, dass die erfindungsgemäße Pigmentpaste nur so geringe Mengen an organischen Lösemitteln enthält, dass die anwendungstechnischen Eigenschaften der erfindungsgemäßen Pigmentpaste hierdurch nicht geprägt, insbesondere nicht nachteilig beeinflusst werden. Vorzugsweise liegt der Gehalt an organischen Lösemitteln, bezogen auf die erfindungsgemäßen Pigmentpaste, unter 10, bevorzugt unter 5 und besonders bevorzugt unter 1 Gew.-% und insbesondere unterhalb der Nachweisgrenze der organischen Lösemittel.

Die erfindungsgemäße Pigmentpaste enthält mindestens ein Micapigment (A) und vorzugsweise mindestens zwei, bevorzugt mindestens drei und insbesondere zwei Micapigmente (A). Bei den Micapigmenten (A) handelt es sich um übliche und bekannte Effektpigmente mit einem schichtförmigen Aufbau aus einer Schicht aus Glimmer und mindestens einer Metalloxidschicht (vgl. Römpp Lexikon Lacke und Druckfarben, Georg Thieme Verlag, Stuttgart, New York, 1998, »Effektpigmente«, Seite 176). Die Micapigmente (A) sind optisch effektgebend und zählen zu den so genannten Perlglanzpigmenten; zusätzlich können sie auch farbgebend sein (vgl. Römpp Lexikon Lacke und Druckfarben, Georg Thieme Verlag, Stuttgart, New York, 1998, »Perlglanzpigmente«, »Perlmuttpigmente«, Seite 438). Sie sind übliche und bekannte Handelsprodukte und werden beispielsweise von der Firma Engelhard unter der Marke Mearlin ® oder von der Firma Merck unter der Marke Iriodin ® vertrieben.

Die Micapigmente (A) sind in der erfindungsgemäßen Pigmentpaste, bezogen auf ihre Gesamtmenge, in einer Menge von 15 bis 25 und insbesondere 18 bis 23 Gew.-% enthalten.

Darüber hinaus kann die erfindungsgemäße Pigmentpaste noch mindestens ein von den Micapigmenten (A) unterschiedliches Pigment enthalten, das vorzugsweise aus der Gruppe, bestehend aus organischen und anorganischen, farbgebenden, optisch effektgebenden, elektrisch leitfähigen, magnetischen, magnetisch abschirmenden, fluoreszierenden, phosphoreszierenden, korrosionshemmenden und füllenden Pigmenten, Pigmenten, die mindestens zwei dieser Eigenschaften aufweisen, und Nanopartikeln ausgewählt wird, sofern ein solches zusätzliches Pigment nicht die anwendungstechnischen Eigenschaften der erfindungsgemäßen Pigmentpaste nachteilig beeinflusst. Vorzugsweise enthält die erfindungsgemäße Pigmentpaste kein weiteres Pigment.

Die erfindungsgemäße Pigmentpaste enthält, bezogen auf ihre Gesamtmenge, 0,45 bis 0,75, insbesondere 0,5 bis 0,7 Gew.-%, mindestens eines, insbesondere eines, nichtassoziativ wirkenden Verdickers aus mindestens einem Methacrylatcopolymerisat auf Basis von (C₁-C₆)-Alkyl(meth)acrylat und (Meth)acrylsäure, insbesondere Methacrylsäure. Vorzugsweise enthält der Verdicker (B) mindestens zwei unterschiedliche (C₁-C₆)-Alkyl(meth)acrylatmonomere einpolymerisiert. Bevorzugt enthält er, bezogen auf seine Gesamtmenge, 40 bis 60 Gew.-% Methacrylsäure einpolymerisiert. Vorzugsweise wird der Verdicker (B) in der Form einer wässrige Dispersion eingesetzt. Besonders bevorzugt werden die Dispersionen der Verdicker (B) verwendet, wie sie beispielsweise in den deutschen Patentanmeldungen DE 196 52 842 A1, Spalte 3, Zeile 42, bis Spalte 4, Zeile 4, oder DE 197 41 554 A1, Spalte 2, Zeile 54, bis Spalte 3, Zeile 15, beschrieben werden. Ganz besonders bevorzugt wird eine wässrige Dispersion des Verdickers (B) verwendet, die unter der Marke Viscalex ® HV 30 von der Firma Allied vertrieben wird und einen Gehalt an Verdicker (B) von 30 Gew.-% hat.

Die erfindungsgemäße Pigmentpaste enthält, bezogen auf ihre Gesamtmenge, 0,1 bis 0,4, insbesondere 0,2 bis 0,3 Gew.-%, mindestens eines, insbesondere eines organischen Amins (C). Vorzugsweise wird das Amin (C) aus der Gruppe der tertiären Amine, vorzugsweise der tertiären Alkylamine und insbesondere der tertiären Hydroxyalkylamine ausgewählt. Beispiele geeigneter tertiärer Hydroxyalkylamine sind Triethanolamin, Methyldiethanolamin und Dimethylethanolamin, insbesondere Dimethylethanolamin.

Die erfindungsgemäße Pigmentpaste enthält desweiteren, bezogen auf ihre Gesamtmenge, 0,1 bis 12, insbesondere 0,5 bis 10 Gew.-% mindestens eines nichtionischen Tensids. Erfindungsgemäß kommen als nichtionische Tenside oder Niotenside (vgl. Römpp Lexikon Lacke und Druckfarben, Georg Thieme Verlag, 1998, Seite 410, »Niotenside«) Tenside in Betracht, deren Hydrophilie durch Polyetherketten, Hydroxylgruppen, Carbonsäureamidgruppen, Urethangruppen und/oder Estergruppen, eingestellt wird. Niotenside sind handelsübliche Produkte und werden beispielsweise unter der Marke Tegodispers ® 740 von der Firma Tego, unter der Marke Hydropalat ® 3037 von der Firma Cognis oder unter der Marke Setalux ® 6802 AQ 4 von der Firma Akzo vertrieben. Vorzugsweise werden Tegodispers ® 740 und Hydropalat ® 3037 eingesetzt. Hydropalat ® 3037 ist ein siliconfreies oberflächenaktives Verlaufsadditiv für wässrige Systeme mit einer Hydroxylzahl von 73 bis 83 mg KOH/g und einer Verseifungszahl (DGF C-V 3) 56 bis 62. Tegodispers ® 740 ist ein nichtionisches, modifiziertes Fettsäurederivat, das aromaten-, amin- und nonylphenolethoxylatfrei ist.

Die erfindungsgemäße Pigmentpaste enthält nicht zuletzt, bezogen auf ihre Gesamtmenge, mindestens 50 und insbesondere mindestens 55 Gew.-% Wasser.

Darüber hinaus kann die erfindungsgemäße Pigmentpaste noch übliche und bekannte Zusatzstoffe, wie lackübliche Additive, enthalten. Es ist indes ein besonderer Vorteil der erfindungsgemäßen Pigmentpaste, dass sie keine weiteren Zusatzstoffe enthalten muss, um die erfindungsgemäßen Vorteile zu erzielen.

Die Herstellung der erfindungsgemäßen Pigmentpaste erfordert keine methodischen Besonderheiten, sondern erfolgt nach den üblichen und bekannten Methoden der Herstellung von Pigmentpasten oder Pigmentzubereitungen durch Vermischen der vorstehend beschriebenen Bestandteile in geeigneten Mischaggregaten wie Rührkessel, Dissolver, Ultraturrax, In-line-Dissolver, Rührwerksmühlen, Perlmühlen oder Extruder. Dabei kann der Fachmann anhand seines allgemeinen Fachwissens die Verfahren und Vorrichtungen so auswählen, dass die jeweils zu dispergierenden Micapigmente (A) nicht geschädigt werden.

Erfindungsgemäß wird die erfindungsgemäße Pigmentpaste für die Herstellung effektgebender oder farb- und effektgebender, wässriger Beschichtungsstoffe, insbesondere Wasserbasislacke, verwendet.

Hierzu wird die erfindungsgemäße Pigmentpaste mit mindestens einem wässrigen Mischlack vermischt, wonach die resultierende Mischung homogenisiert wird. Vorzugsweise werden hierfür die vorstehend beschriebenen Verfahren und Vorrichtungen verwendet.

Der Mischlack enthält mindestens ein wasserlösliches und/oder - dispergierbares Bindemittel. Vorzugsweise wird das Bindemittel aus der Gruppe, bestehend aus statistisch, alternierend und blockartig aufgebauten, linearen, verzweigten und kammartig aufgebauten (Co)Polymerisaten von ethylenisch ungesättigten Monomeren oder Polyadditionsharzen und/oder Polykondensationsharzen, ausgewählt. Zu diesen Begriffen wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, ) sowie Seiten 73 und 74, »Bindemittel«, verwiesen.

Vorzugsweise werden die (Co)Polymerisate von ethylenisch ungesättigten Monomeren aus der Gruppe, bestehend aus (Meth)Acrylat(co)polymerisaten und partiell verseiften Polyvinylestern, insbesondere (Meth)Acrylatcopolymerisaten, und die Polyadditionsharze und/oder Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden, Polyimiden, Polyester-Polyurethanen, Polyether-Polyurethanen oder Polyester-Polyether-Polyurethanen, insbesondere Polyester-Polyurethanen, ausgewählt.

Ganz besonders bevorzugt werden die Bindemittel verwendet, wie sie in üblichen und bekannten Wasserbasislacken eingesetzt werden. Bindemittel dieser Art werden beispielsweise in der deutschen Patentanmeldung DE 196 52 842 A1, Spalte 2, Zeile 53, bis Spalte 3, Zeile 46, und in der deutschen Patentanmeldung DE 199 14 896 A1, Spalte 5, Zeile 34, bis Spalte 11, Zeile 5, beschrieben.

Die Bindemittel werden in den für Wasserbasislacke üblichen und bekannten Mengen im Mischlack eingesetzt.

Darüber hinaus kann der Mischlack noch übliche und bekannte Vernetzungsmittel, und Additive in den üblichen und bekannten Mengen enthalten, wie sie beispielsweise in der deutschen Patentanmeldung DE 199 14 896 A1, Spalte 11, Zeile 6, bis Spalte 16, Zeile 16, beschrieben werden.

Wesentlich ist, dass die erfindungsgemäße Pigmentpaste bei dem erfindungsgemäßen Verfahren in einer Menge eingesetzt wird, dass der resultierende effektgebende oder farb- und effektgebende, wässrige Beschichtungsstoff, bezogen auf seine Gesamtmenge
- 2 bis 6 Gew.-% mindestens eines der Micapigmente (A),
- 0,1 bis 2 Gew.-% mindestens einen der nichtassoziativ wirkenden Verdicker (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines der nichtionischen Tenside (D)
enthält.

Die resultierenden wässrigen Beschichtungsstoffe, insbesondere die Wasserbasislacke, können physikalisch, thermisch selbst- und/oder fremdvernetzend, mit aktinischer Strahlung oder thermisch und mit aktinischer Strahlung härtbar sein. Unter aktinischer Strahlung ist nahes Infrarot (NIR), sichtbares Licht, UV-Strahlung oder Röntgenstrahlung, insbesondere UV-Strahlung, sowie Korpuskularstrahlung, wie Elektronenstrahlung, zu verstehen. Die gemeinsame thermische Härtung und Härtung mit aktinischer Strahlung wird von der Fachwelt auch als Dual-Cure bezeichnet.

Vorzugsweise werden die Wasserbasislacke für die Herstellung von effektgebenden oder farb- und effektgebende Mehrschichtlackierungen auf grundierten und ungrundierten Substraten eingesetzt.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Substrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Demgemäß sind die Wasserbasislacke für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kunststoffteilen, insbesondere transparenten Kunststoffteilen, Kleinteilen, Coils, Container, Emballagen, elektrotechnischen Bauteilen und weißer Ware sowie für das Beschichten von Hohlglasartikeln besonders gut geeignet.

Ganz besonders gut geeignet sind die Wasserbasislacke für die Originallackierung (OEM) und Reparaturlackierung von Kraftfahrzeugen, insbesondere von PKW.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterialien lackiert werden.

Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Mehrschichtlackierungen können in unterschiedlicher Weise hergestellt werden. Bevorzugt werden die in der deutschen Patentanmeldung DE 199 30 664 A1, Seite 15, Zeile 36 bis 58, oder in der deutschen Patentanmeldung DE 199 14 896 A1, Spalte 2, Zeile 15, bis Spalte 3, Zeilen 24, und Spalte 16, Zeile 54, bis Spalte 18, Zeile 54, beschriebenen Nass-in-nass-Verfahren eingesetzt.

Dabei werden die üblichen und bekannten Verfahren und Vorrichtungen zur Applikation und Härtung von Beschichtungsstoffen, insbesondere wässrigen Beschichtungsstoffen, angewandt.

Aufgrund der hervorragenden Verteilung der Micapigmente (A) in der erfindungsgemäßen Pigmentpaste und ihrer Lagerstabilität resultieren letztlich Mehrschichtlackierungen von hervorragender Farbtonstabilität und Stabilität der optischen Effekte. Die Mehrschichtlackierungen können daher mit Vorteil für die Originallackierung und Reparaturlackierung von PKW der Oberklasse verwendet werden.

### Beispiele und Vergleichsversuch

### Beispiele 1 und 2

### Die Herstellung von Micapigmenten enthaltenden, von Bindemitteln und Reibharzen freien, wässrigen Pigmentpasten

Zur Herstellung der Pigmentpasten der Beispiele 1 und 2 wurden die in der Tabelle aufgeführten Bestandteile miteinander vermischt und homogenisiert.

**Tabelle: Stoffliche Zusammensetzung der wässrigen Pigmentpasten der Beispiele 1 und 2**

| **Bestandteil** | **Beispiel 1** | **Beispiel 2** |
|---|---|---|
| | **(Gew.-%)** | **(Gew.-%)** |
| Micapigmente (A): | | |
| Micapigment 64517 | 21,1 | 18,2 |
| Micapigment 64585 | 3,7 | 3,1 |

| Verdicker (B): | | |
|---|---|---|
| Viscalex ® HV 30 der Firma Allied | | |
| (Methacrylatcopolymerisat, 30 Gew.-%ig in Wasser) | 0,2 | 0,21 |

| Organisches Amin (C): | | |
|---|---|---|
| Dimethylethanolamin (10 Gew.-%ig in Wasser) | 2,3 | 2,43 |

| Niotensid (D): | | |
|---|---|---|
| Hydropalat ® 3037 der Firma Henkel | 1,16 | - |
| Tegodispers ® 740 der Firma Tego | - | 1,21 |
| | | |
| Wasser (E) | 51,74 | 54,06 |

Die Pigmentpasten der Beispiele 1 und 2 zeigten selbst nach sechs Monaten keinerlei Absetzen und Serumbildung. Sie waren hervorragend für die Herstellung von besonders hochwertigen Wasserbasislacken zur Herstellung von effektgebenden Mehrschichtlackierungen für PKW der Oberklasse geeignet.

### Vergleichsversuch

### Die Herstellung einer Bindemittel, Vernetzungsmittel, organische Lösemittel und Micapigmente enthaltenden Pigmentpaste

Für die Herstellung der Pigmentpaste wurde ein wässriger Mischlack aus 15 Gewichtsteilen einer Polyurethanharzdispersion, 6,06 Gewichtsteilen eines Melaminharzes, 1,15 Gewichtsteilen einer 3 Gew.-%igen wässrigen Dispersion eines Schichtsilikats, 0,01 Gewichtsteilen Methanol, 0,6 Gewichtsteilen Isobutanol, 11,62 Gewichtsteilen 2-Butoxyethanol, 0,09 Gewichtsteilen Methylethylketon, 0,56 Gewichtsteilen Dimethylethanolamin, 1,15 Gewichtsteilen eines Polyalkylenglykols (Pluriol ® P 900 der Firma BASF Aktiengesellschaft), 63,75 Gewichtsteilen deionisiertes Wasser und 0,06 Gewichtsteilen Formaldehyd hergestellt.

Die Pigmentpaste wurde aus 75 Gewichtsteilen des Mischlacks, 21,3 Gewichtsteilen des Micapigments 64517 und 3,7 Gewichtsteilen des Micapigments 64585 hergestellt. Die Pigmentpaste koagulierte bereits nach einer Woche und bildete ein Serum. Danach war sie nicht mehr für die Herstellung von Wasserbasislacken geeignet.

## Patentansprüche

1. Von Bindemitteln und Reibharzen freie, wässrige Pigmentpaste, enthaltend, bezogen auf ihre Gesamtmenge,
(A) 15 bis 25 Gew.-% mindestens eines Micapigments,
(B) 0,45 bis 0,75 Gew.-% mindestens eines nichtassoziativ wirkenden Verdickers aus mindestens einem Methacrylatcopolymerisat auf Basis von (C₁-C₆)-Alkyl(meth)acrylat und (Meth)acrylsäure,
(C) 0,1 bis 0,4 Gew.-% mindestens eines organischen Amins,
(D) 0,1 bis 12 Gew.-% mindestens eines nichtionischen Tensids und
(E) mindestens 50 Gew.-% Wasser.

2. Pigmentpaste nach Anspruch 1, **dadurch gekennzeichnet, dass** sie, bezogen auf ihre Gesamtmenge, 18 bis 23 Gew.-% mindestens eines Micapigments (A) enthält.

3. Pigmentpaste nach Anspruch 1 oder 2, **dadurch gekennzeichnet, dass** sie, bezogen auf ihre Gesamtmenge, 0,5 bis 0,7 Gew.-% mindestens eines nichtassoziativ wirkenden Verdickers (B) enthält.

4. Pigmentpaste nach einem der Ansprüche 1 bis 3, **dadurch gekennzeichnet, dass** der Verdicker (B) mindestens zwei unterschiedliche (C₁-C₆)-Alkyl(meth)acrylatmonomere einpolymerisiert enthält.

5. Pigmentpaste nach einem der Ansprüche 1 bis 4, **dadurch gekennzeichnet, dass** der Verdicker (B), bezogen auf seine Gesamtmenge, 40 bis 60 Gew.-% Methacrylsäure einpolymerisiert enthält.

6. Pigmentpaste nach einem der Ansprüche 1 bis 5, **dadurch gekennzeichnet, dass** das organische Amin (C) aus der Gruppe der tertiären Amine ausgewählt wird.

7. Pigmentpaste nach Anspruch 6, **dadurch gekennzeichnet, dass** das tertiäre Amin (C) aus der Gruppe der Hydroxyalkylamine ausgewählt wird.

8. Pigmentpaste nach Anspruch 7, **dadurch gekennzeichnet, dass** das Hydroxyalkylamin (C) Dimethylethanolamin ist.

9. Pigmentpaste nach einem der Ansprüche 1 bis 8, **dadurch gekennzeichnet, dass** sie das organische Amin (C), bezogen auf ihre Gesamtmenge, in einer Menge von 0,2 bis 0,3 Gew.-% enthält.

10. Pigmentpaste nach einem der Ansprüche 1 bis 9, **dadurch gekennzeichnet, dass** sie das nichtionische Tensid (D), bezogen auf ihre Gesamtmenge, in einer Menge von 0,5 bis 10 Gew.-% enthält.

11. Pigmentpaste nach einem der Ansprüche 1 bis 10, **dadurch gekennzeichnet, dass** sie, bezogen auf ihre Gesamtmenge, mindestens 55 Gew.-% Wasser enthält.

12. Verwendung der von Bindemitteln und Reibharzen freien, wässrigen Pigmentpaste gemäß einem der Ansprüche 1 bis 11 für die Herstellung effektgebender oder farb- und effektgebender, wässriger Beschichtungsstoffe.

13. Verwendung nach Anspruch 12, **dadurch gekennzeichnet, dass** die wässrigen Beschichtungsstoffe Wasserbasislacke sind.

14. Verwendung nach Anspruch 12 oder 13, **dadurch gekennzeichnet, dass** die wässrigen Beschichtungsstoffe der Herstellung effektgebender oder farb- und effektgebender Mehrschichtlackierungen dienen.

15. Verfahren zur Herstellung eines effektgebenden oder eines farb- und effektgebenden, wässrigen Beschichtungsstoffs, bei dem man mindestens eine Pigmentpaste mit mindestens einem wässrigen Mischlack, enthaltend mindestens ein wasserlösliches und/oder - dispergierbares Bindemittel, vermischt und die resultierende Mischung homogenisiert, **dadurch gekennzeichnet, dass** man mindestens eine von Bindemitteln und Reibharzen freie, wässrige Pigmentpaste gemäß einem der Ansprüche 1 bis 11 in einer Menge verwendet, dass der resultierende effektgebende oder farb- und effektgebende, wässrige Beschichtungsstoff, bezogen auf seine Gesamtmenge,
- 2 bis 6 Gew.-% mindestens eines Micapigments (A),
- 0,1 bis 2 Gew.-% mindestens eines nichtassoziativ wirkenden Verdickers (B) aus mindestens einem Methacrylatcopolymerisat auf Basis von (C₁-C₆)-Alkyl(meth)acrylat und (Meth)acrylsäure und
- 0,02 bis 2,4 Gew.-% mindestens eines nichtionischen Tensids (D)
enthält.

16. Verfahren nach Anspruch 15, **dadurch gekennzeichnet, dass** das Bindemittel aus der Gruppe, bestehend aus statistisch, alternierend und blockartig aufgebauten, linearen, verzweigten und kammartig aufgebauten (Co)Polymerisaten von ethylenisch ungesättigten Monomeren oder Polyadditionsharzen und/oder Polykondensationsharzen, ausgewählt wird.

17. Verfahren nach Anspruch 16, **dadurch gekennzeichnet, dass** die (Co)Polymerisate von ethylenisch ungesättigten Monomeren aus der Gruppe, bestehend aus (Meth)Acrylat(co)polymerisaten und partiell verseiften Polyvinylestern, insbesondere (Meth)Acrylatcopolymerisaten, und die Polyadditionsharze und/oder Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden, Polyimiden, Polyester-Polyurethanen, Polyether-Polyurethanen oder Polyester-Polyether-Polyurethanen, insbesondere Polyester-Polyurethanen, ausgewählt werden.

## Claims

1. Aqueous pigment paste free from binders and grinding resins, **characterized in that** based on its overall amount
(A) from 15 to 25% by weight of at least one mica pigment,
(B) from 0.45 to 0.75% by weight of at least one nonassociative thickener **characterized in that** at least one methacrylate copolymer based on C₁-C₆ alkyl (meth)acrylate and (meth)acrylic acid,
(C) from 0.1 to 0.4% by weight of at least one organic amine,
(D) from 0.1 to 12% by weight of at least one nonionic surfactant, and
(E) at least 50% by weight of water.

2. Paste according to Claim 1, **characterized in that**, based on its overall amount, it comprises from 18 to 23% by weight of at least one mica pigment (A).

3. Paste according to Claim 1 or 2, **characterized in that**, based on its overall amount, it comprises from 0.5 to 0.7% by weight of at least one nonassociative thickener (B).

4. Paste according to any of Claims 1 to 3, **characterized in that** the thickener (B) contains in copolymerized form at least two different C₁-C₆ alkyl (meth)acrylate monomers.

5. Paste according to any of Claims 1 to 4, **characterized in that** the thickener (B), based on its overall amount, contains from 40 to 60% by weight of methacrylic acid in copolymerized form.

6. Paste according to any of Claims 1 to 5, **characterized in that** the organic amine (C) is selected from the group of the tertiary amines.

7. Paste according to Claim 6, **characterized in that** the tertiary amine (C) is selected from the group of the hydroxylalkylamines.

8. Paste according to Claim 7, **characterized in that** the hydroxyalkylamine (C) is dimethylethanolamine.

9. Paste according to any of Claims 1 to 8, **characterized in that**, based on its overall amount, it comprises the organic amine (C) in an amount of from 0.2 to 0.3% by weight.

10. Paste according to any of Claims 1 to 9, **characterized in that**, based on its overall amount, it comprises the nonionic surfactant (D) in an amount of from 0.5 to 10% by weight.

11. Paste according to any of Claims 1 to 10, **characterized in that**, based on its overall amount, it comprises at least 55% by weight of water.

12. Use of an aqueous pigment paste free from binders and grinding resins, according to any of Claims 1 to 11, for preparing aqueous effect, or color and effect, coating materials.

13. Use according to Claim 12, **characterized in that** the aqueous coating materials are aqueous basecoat materials.

14. Use according to Claim 12 or 13, **characterized in that** the aqueous coating materials serve for producing multicoat effect, or color and effect, paint systems.

15. Process for preparing an aqueous effect or color and effect coating material by mixing at least one pigment paste with at least one aqueous mixing varnish **characterized in that** at least one water-soluble and/or -dispersible binder and homogenizing the resulting mixture, **characterized in that** at least one aqueous pigment paste free from binders and grinding resins, according to any of Claims 1 to 11, is used in an amount such that the resulting aqueous effect or color and effect coating material comprises based on its overall amount
- from 2 to 6% by weight of at least one mica pigment (A),
- from 0.1 to 2% by weight of at least one nonassociative thickener (B) **characterized in that** at least one methacrylate copolymer based on C₁-C₆ alkyl (meth)acrylate and (meth)acrylic acid, and
- from 0.02 to 2.4% by weight of at least one nonionic surfactant (D).

16. Process according to Claim 15, **characterized in that** the binder is selected from the group consisting of random, alternating and block, linear, branched, and comb addition (co)polymers of ethylenically unsaturated monomers or polyaddition resins and/or polycondensation resins.

17. Process according to Claim 16, **characterized in that** the addition (co)polymers of ethylenically unsaturated monomers are selected from the group consisting of (meth)acrylate (co)polymers and partially hydrolyzed polyvinyl esters, especially (meth)acrylate copolymers, and the polyaddition resins and/or polycondensation resins are selected from the group consisting of polyesters, alkyds, polyurethanes, polylactones, polycarbonates, polyethers, epoxy resin-amine adducts, polyureas, polyamides, polyimides, polyester-polyurethanes, polyether-polyurethanes, and polyester-polyether-polyurethanes, especially polyester-polyurethanes.

## Revendications

1. Pâte pigmentaire aqueuse exempte de liants et de résines de frottement, contenant, rapporté à sa quantité totale :
(A) 15 à 25 % en poids d'au moins un pigment de type mica,
(B) 0,45 à 0,75 % en poids d'au moins un épaississant sans effet associatif en au moins un copolymère de méthacrylate, à base de (méth)acrylate d'alkyle en (C₁-C₆) et d'acide (méth)acrylique,
(C) 0,1 à 0,4 % en poids d'au moins une amine organique,
(D) 0,1 à 12 % en poids d'au moins un tensioactif non ionique et
(E) au moins 50 % en poids d'eau.

2. Pâte pigmentaire selon la revendication 1, **caractérisée en ce qu'**elle contient, rapporté à sa quantité totale, 18 à 23 % en poids d'au moins un pigment de type mica (A).

3. Pâte pigmentaire selon la revendication 1 ou 2, **caractérisée en ce qu'**elle contient, rapporté à sa quantité totale, 0,5 à 0,7 % en poids d'au moins un épaississant (B) sans effet associatif.

4. Pâte pigmentaire selon l'une quelconque des revendications 1 à 3, **caractérisée en ce que** l'épaississant (B) contient au moins deux monomères différents de (méth)acrylate d'alkyle en (C₁-C₆), polymérisés avec lui.

5. Pâte pigmentaire selon l'une quelconque des revendications 1 à 4, **caractérisée en ce que** l'épaississant (B), rapporté à sa quantité totale, contient 40 à 60 % en poids d'acide méthacrylique, polymérisés avec lui.

6. Pâte pigmentaire selon l'une quelconque des revendications 1 à 5, **caractérisée en ce que** l'amine organique (C) est choisie parmi le groupe des amines tertiaires.

7. Pâte pigmentaire selon la revendication 6, **caractérisée en ce que** l'amine organique (C) est choisie parmi le groupe des hydroxyalkylamines.

8. Pâte pigmentaire selon la revendication 7, **caractérisée en ce que** l'hydroxyalkylamine (C) est la diméthyléthanolamine.

9. Pâte pigmentaire selon l'une quelconque des revendications 1 à 8, **caractérisée en ce que**, rapporté à sa quantité totale, elle contient l'amine organique (C) en une quantité de 0,2 à 0,3 % en poids.

10. Pâte pigmentaire selon l'une quelconque des revendications 1 à 9, **caractérisée en ce que**, rapporté à sa quantité totale, elle contient le tensioactif non ionique (D) en une quantité de 0,5 à 10 % en poids.

11. Pâte pigmentaire selon l'une quelconque des revendications 1 à 10, **caractérisée en ce que**, rapporté à sa quantité totale, elle contient au moins 55 % en poids d'eau.

12. Utilisation de la pâte pigmentaire aqueuse exempte de liants et de résines de frottement selon l'une quelconque des revendications 1 à 11 à la préparation de substances de revêtement aqueuses, à effet ou colorantes et à effet.

13. Utilisation selon la revendication 12, **caractérisée en ce que** les substances de revêtement aqueuses sont des laques à l'eau.

14. Utilisation selon la revendication 12 ou 13, **caractérisée en ce que** les substances de revêtement aqueuses servent à la préparation de laques multicouches à effet ou colorantes et à effet.

15. Procédé de préparation d'une substance de revêtement aqueuse à effet ou colorante et à effet, dans laquelle on mélange au moins une pâte pigmentaire à au moins une laque mixte soluble et/ou se dispersant dans l'eau et on homogénéise le mélange résultant, **caractérisé en ce que** l'on utilise au moins une pâte pigmentaire aqueuse exempte de liants et de résines de frottement selon l'une quelconque des revendications 1 à 11, en une quantité telle que la substance de revêtement aqueuse à effet ou colorante et à effet qui en résulte, rapportés à sa quantité totale, contienne:
- 2 à 6 % en poids d'au moins un pigment de type mica (A),
- 0,1 à 2 % en poids d'au moins un épaississant (B) sans effet associatif en au moins un copolymère de méthacrylate à base de (méth)acrylate d'alkyle en (C₁-C₆) et d'acide (méth)acrylique et
- 0,02 à 2,4 % en poids d'au moins un tensioactif non ionique (D).

16. Procédé selon la revendication 15, **caractérisé en ce que** le liant est choisi parmi le groupe consistant en des (co)polymères construits statistiquement, en alternance et en bloc, linéaires, ramifiés et en peigne, de monomères éthyléniquement insaturés, ou de résines de polyaddition et/ou de résines de polycondensation.

17. Procédé selon la revendication 16, **caractérisé en ce que** les (co)polymères de monomères éthyléniquement insaturés sont choisis parmi le groupe consistant en les (co)polymères de (méth)acrylates et des esters polyvinyliques partiellement saponifiés en particulier des copolymères de (méth)acrylates, et les résines de polyaddition et/ou les résines de polycondensation parmi le groupe consistant en les polyesters, les alkydes, les polyuréthanes, les polylactones, les polycarbonates, les polyéthers, les produits d'addition résine époxyde-amine, les polyurées, les polyamides, les polyimides, les polyesters-polyuréthanes, les polyéthers-polyuréthanes ou les polyesters-polyéthers-polyuréthanes, en particulier les polyesters-polyuréthanes.
